# EUROPEAN PATENT APPLICATION

(11) **EP 4 715 966 A1**
(43) Date of publication of application: **25.03.2026**
(21) Application number: 24809950.9
(22) Date of filing: 24.01.2024
(51) Int. Cl.: H01M 50/10

(54) **BATTERY CELL CASING AND MANUFACTURING METHOD THEREFOR, BATTERY CELL, BATTERY, AND ELECTRIC DEVICE**

(30) Priority: 23.05.2023 CN 202310583206
(71) Applicant: Contemporary Amperex Technology Co., Limited, Ningde, Fujian 352100 (CN)
(72) Inventor: LIN, Wenfa, Ningde, Fujian 352100 (CN); WEN, Yaoling, Ningde, Fujian 352100 (CN); CAO, Jierui, Ningde, Fujian 352100 (CN); LIU, Quanlong, Ningde, Fujian 352100 (CN)
(74) Representative: Gong, Jinping
(86) International application number: PCT/CN2024/073889
(87) International publication number: WO 2024/239700

(57) **Abstract**

The present application provides a battery cell case and a manufacturing method therefor, a battery cell, a battery, and an electric apparatus. The case comprises at least two side plates, wherein each side plate is independently formed, and the at least two side plates are sequentially arranged and connected in the circumferential direction of the case so as to enclose a hollow tubular structure.

## Description

### CROSS-REFERENCE TO RELATED APPLICATION

The present application claims the priority of Chinese Patent Application No. 202310583206.0 filed on May 23, 2023 and entitled "BATTERY CELL CASE AND MANUFACTURING METHOD THEREFOR, BATTERY CELL, BATTERY, AND ELECTRICAL APPARATUS", the content of which is incorporated herein by reference in its entirety.

### TECHNICAL FIELD

The present application relates to the technical field of batteries, and in particular, to a battery cell case and a manufacturing method therefor, a battery cell, a battery, and an electrical apparatus.

### BACKGROUND

With the development of new-energy technologies, batteries are increasingly widely applied, such as applied in a mobile phone, a laptop, a storage battery car, an electric vehicle, an electric airplane, an electric boat, an electric toy car, an electric toy boat, an electric toy airplane, and an electric tool.

In a battery cell, a case is an important component of the battery cell, and the molding difficulty thereof directly affects the production cost of the battery cell. Therefore, how to effectively reduce the molding difficulty of the case is an urgent problem to be solved in battery technology.

### SUMMARY OF THE INVENTION

In view of the above problems, the present application provides a battery cell case and a manufacturing method therefor, a battery cell, a battery, and an electrical apparatus, which can effectively reduce the difficulty of molding the case and improve the dimensional precision of the case.

In a first aspect, an embodiment of the present application provides a battery cell case, the case comprising at least two side plates. Each of the side plates is formed independently, and the at least two side plates are sequentially arranged and connected along a circumferential direction of the case to enclose a hollow tubular structure.

In the above technical solution, the case is configured to be formed by splicing at least two independently formed side plates. Compared with a case integrally formed by stamping, the process is simple, the thickness consistency of the case is relatively good, and the curvature at the corner of the case can be better controlled, so that the dimensional precision of the case can be effectively improved.

In some embodiments of the first aspect, the thickness t1 of the side plates satisfies the following relationship: 0.1 mm ≤ t1 ≤ 0.3 mm, which can make the case lightweight while enabling the case to meet strength requirements and can effectively improve the energy density of the battery cell.

In some embodiments of the first aspect, the tubular structure is a rectangular tubular structure or a cylindrical tubular structure. The specific structural shape of the tubular structure is diversified, so that the applicability of the case can be effectively improved.

In some embodiments of the first aspect, two adjacent side plates are welded in the circumferential direction of the case. Compared with other connection methods, welding has a higher connection firmness and a lower cost.

In some embodiments of the first aspect, the case comprises two side plates. Each of the side plates comprises a main body portion and two bending portions. The two bending portions are respectively connected to two ends of the main body portion along a first direction and are bent relative to the main body portion. The main body portions of the two side plates are opposite to each other along a second direction, and the first direction intersects with the second direction. The two bending portions of one of the side plates are respectively connected to the two bending portions of the other side plate.

In the above technical solution, two side plates are used and connected to form a case, which greatly simplifies the structural complexity of the case and can not only further improve the dimensional precision of the case, but also help to reduce the preparation cost of the case.

In some embodiments of the first aspect, a dimension of the main body portion in the first direction is dl, a dimension of the bending portion in a third direction is d2, d1 ≥ 2 * d2, and any two of the first direction, the second direction, and the third direction are perpendicular to each other.

In the above technical solution, the dimension of the main body portion in the first direction and the dimension of the bending portions in the third direction are defined as being within the above ranges, which can to a certain extent avoid relatively poor precision caused by the dimension of the bending portions in the third direction being too long, thereby affecting the effect of connection between the two side plates. Not only can the connection firmness between the two side plates and thus the overall structural strength of the case be improved, but also the overall dimensional precision of the case can be further improved.

In some embodiments of the first aspect, d1 satisfies the following relationship: 100 mm ≤ d1 ≤ 1000 mm, which can satisfy the accommodation need for large-sized electrode assemblies and effectively improve the applicability of the case.

In some embodiments of the first aspect, a first opening is formed at one end of the tubular structure, the case further comprises a first end cover, and the first end cover is connected to the at least two side plates and covers the first opening.

In the above technical solution, the first end cover is independently formed and connected to the side plates to jointly form a case, which can further improve the curvature at the connection between the first end cover and the side plates and can thus improve the dimensional precision of the case.

In some embodiments of the first aspect, the first end cover is welded to the at least two side plates. Compared with other connection methods, welding has a higher connection firmness and a lower cost.

In some embodiments of the first aspect, the thickness of the first end cover is greater than the thickness of the side plates, so that the first end cover has a better structural strength to meet the requirement of bearing the weight of the electrode assembly, thereby improving the reliability of the case.

In some embodiments of the first aspect, the thickness t2 of the first end cover satisfies the following relationship: 0.4 mm ≤ t2 ≤ 1 mm, which can make the case lightweight while enabling the first end cover to meet strength requirements and can effectively improve the energy density of the battery cell.

In some embodiments of the first aspect, at least part of the first end cover is accommodated in an accommodating space enclosed by the tubular structure, and an outer peripheral surface of the first end cover abuts against side surfaces of the side plates close to the accommodating space, which can correspondingly reduce the overall volume of the case, thereby facilitating the improvement of the energy density of the battery cell.

In some embodiments of the first aspect, the first end cover is completely accommodated in the accommodating space, which can further improve the energy density of the battery cell.

In a second aspect, an embodiment of the present application provide a battery cell, comprising the case provided by any embodiment of the first aspect.

In some embodiments of the second aspect, a second opening is formed at the other end of the tubular structure, and the battery cell further comprises a second end cover and an electrode assembly, the second end cover is connected to at least two side plates and covers the second opening, and the electrode assembly is accommodated in the case.

In some embodiments of the second aspect, the thickness t3 of the second end cover satisfies the following relationship: 0.4 mm ≤ t3 ≤ 0.8mm, which can make the case lightweight while enabling the second end cover to meet strength requirements and can effectively improve the energy density of the battery cell.

In some embodiments of the second aspect, the second end cover is provided with a pressure relief port and a stress relief groove surrounding the pressure relief port. The battery cell further comprises a pressure relief mechanism, and the pressure relief mechanism is installed on the second end cover and covers the pressure relief port.

In the above technical solution, the stress relief groove can absorb the stress generated during the installation of the pressure relief mechanism and the pressure relief port, which can thus reduce the impact of the installation of the pressure relief mechanism and the pressure relief port on the second end cover and make it beneficial to improving the product yield.

In a third aspect, an embodiment of the present application provides a battery, comprising the battery cell provided by any embodiment of the second aspect.

In a fourth aspect, an embodiment of the present application provides an electrical apparatus, comprising the battery cell provided by any embodiment of the second aspect, where the battery cell is used for providing electrical energy.

In a fifth aspect, an embodiment of the present application provides a method for manufacturing a case, which is used for manufacturing the case provided by any embodiment of the first aspect. The method for manufacturing a case comprises:
providing at least two independently formed side plates; and
welding the at least two side plates sequentially along a circumferential direction of the case to enclose a hollow tubular structure.

In some embodiments of the fifth aspect, the method for manufacturing a case further comprises:
providing a first end cover; and
welding the first end cover to one end of the tubular structure.

In some embodiments of the fifth aspect, the welding is laser welding.

The above description only refers to an overview of the technical solution of the present application. In order to understand the technical means of the present application more clearly, it can be implemented according to the content of the description. In order to make the above-mentioned and other purposes, features and advantages of the present application more apparent, the specific embodiments of the present application are listed below.

### DESCRIPTION OF DRAWINGS

By reading the detailed description of the preferred embodiments below, various other advantages and benefits will become apparent to those of ordinary skill in the art. The drawings are used for the purpose of illustrating the preferred embodiments only and are not to be considered a limitation to the present application. Moreover, throughout the drawings, like reference numerals represent like components. In the drawings:
FIG. 1 is a schematic structural view of a vehicle provided in some embodiments of the present application;
FIG. 2 is an exploded schematic view of a battery provided by some embodiments of the present application;
FIG.3 is a schematic structural view of a battery module shown in FIG. 2;
FIG. 4 is an exploded schematic view of a battery cell provided in some embodiments of the present application;
FIG. 5 is a schematic structural view of a case of a battery cell provided in some embodiments of the present application;
FIG. 6 is a schematic structural view of a side plate of a case of a battery cell provided in some embodiments of the present application;
FIG. 7 is an exploded structural axonometric view of a case of another battery cell provided by some embodiments of the present application;
FIG. 8 is an exploded structural side view of a case of another battery cell provided by some embodiments of the present application;
FIG. 9 is a structural side view of the assembled case of another battery cell provided by some embodiments of the present application;
FIG. 10 is an enlarged schematic structural view of FIG. 9 at H;
FIG. 11 is a schematic structural view of a case of another battery cell provided by some embodiments of the present application;
FIG. 12 is an enlarged schematic structural view of a second end cover of a case of another battery cell provided by some embodiments of the present application; and
FIG. 13 is a schematic cross-sectional view of FIG. 12 taken along A-A.

Reference numerals in the Detailed Description are as follows:
1. vehicle; 2. battery; 3. controller; 4. motor; 5. box body; 5a. first box part; 5b. second box part; 5c. accommodating space; 6. battery module; 7. battery cell; 71. case; 72. electrode assembly; 73. end cover;
10. side plate; 11. main body portion; 12. bending portion; 13. first opening; 14. accommodating space; 15. second opening; 20. first end cover; 30. second end cover; 31. pressure relief port; 32. stress relief groove; X. first direction; Y. second direction; and Z. third direction.

### DETAILED DESCRIPTION

For the objects, technical solutions and advantages of the embodiments of the present application to be clearer, the technical solutions in the embodiments of the present application will be clearly and completely described below in conjunction with the drawings in the embodiments of the present application, and it is apparent that the described embodiments are some, rather than all, of the embodiments of the present application. All other embodiments obtained by those of ordinary skill in the art based on the embodiments of the present application without involving any creative effort shall fall within the scope of protection of the present application.

Unless otherwise defined, all technical and scientific terms used in the present application shall have the same meanings as those generally understood by those skilled in the technical field to which the present application belongs. The terms used in the specification of the present application are merely for the purpose of describing specific embodiments and are not intended to limit the present application. The terms "include" and "have" and any variations thereof in the specification and claims of the present application and the above Description of Drawings are intended to cover non-exclusive inclusion. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, or characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is simply a description of an association relationship of associated objects and indicates that there may be three relationships, for example, A and/or B may represent three situations: A exists alone, both A and B exist, and B exists alone. In addition, the character "/" in the present application generally means that the associated objects before and after it are in an "or" relationship.

In the embodiments of the present application, like reference numerals indicate like components, and for the sake of brevity, detailed description of the same components is omitted in different embodiments. It should be understood that the thickness, length, width, and other dimensions of the various components in the embodiments of the present application as shown in the drawings, and the overall thickness, length, width, and other dimensions of an integrated apparatus, are for illustrative purpose only and should not constitute any limitation to the present application.

"A plurality of" appearing in the present application means two or more (including two).

The term "parallel" in the present application includes not only absolute parallel cases, but also approximately parallel cases that are conventionally known in engineering; moreover, "perpendicular" also includes not only absolute perpendicular cases, but also approximately perpendicular cases that are conventionally known in engineering.

In the embodiments of the present application, the battery cell can be a secondary battery cell. The secondary battery cell refers to a battery cell that, after being discharged, can activate an active material by charging for continued use.

The battery cell can be a lithium-ion battery cell, a sodium-ion battery cell, a sodium/lithium-ion battery cell, a lithium metal battery cell, a sodium metal battery cell, a lithium-sulfur battery cell, a magnesium-ion battery cell, a nickel-metal hydride battery cell, a nickel-cadmium battery cell, a lead storage battery cell, etc., which is not limited in the embodiments of the present application.

The battery cell generally comprises an electrode assembly. The electrode assembly comprises a positive electrode plate, a negative electrode plate, and a separator. During charging and discharging of the battery cell, active ions (e.g., lithium ions) are intercalated and deintercalated between the positive electrode plate and the negative electrode plate. The separator is arranged between the positive electrode plate and the negative electrode plate, and mainly functions to prevent a short circuit between the positive electrode and the negative electrode while enabling the active ions to pass through.

In some embodiments, the positive electrode plate comprises a positive electrode current collector and a positive electrode active material provided on at least one surface of the positive electrode current collector.

For example, the positive electrode current collector has two surfaces opposite to each other in a thickness direction of the positive electrode current collector, and the positive electrode active material layer is provided on either or both of the two opposite surfaces of the positive electrode current collector.

By way of example, the positive electrode current collector can be a metal foil or a composite current collector. For example, as the metal foil, aluminum or stainless steel treated with silver on the surface, copper, aluminum, nickel, a carbon electrode, carbon, nickel, or titanium can be used. The composite current collector can comprise a polymer material substrate layer and a metal layer. The composite current collector can be formed by forming a metal material (aluminum, aluminum alloys, nickel, nickel alloys, titanium, titanium alloys, silver and silver alloys, etc.) on a polymer material substrate (such as polypropylene, polyethylene terephthalate, polybutylene terephthalate, polystyrene, polyethylene, etc.).

By way of example, the positive electrode active material can comprise at least one of the following materials: a lithium-containing phosphate, a lithium transition metal oxide, and respective modified compounds thereof. However, the present application is not limited to these materials, and other conventional materials that can be used as positive electrode active materials for batteries may also be used. Only a single one of or a combination of two or more of these positive electrode active materials can be used. Examples of lithium-containing phosphates may include, but are not limited to, at least one of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite. Examples of lithium transition metal oxides can include, but are not limited to, at least one of lithium cobalt oxide (e.g., LiCoO₂), lithium nickel oxide (e.g., LiNiO₂), lithium manganese oxide (e.g., LiMnO₂, LiMn2O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), lithium nickel cobalt aluminum oxide (e.g., LiNi_{0.35}Co_{0.15}Al_{0.05}O₂), a modified compound thereof, etc.

In some implementations, the negative electrode plate comprises a negative electrode current collector and a negative electrode active material provided on at least one surface of the negative electrode current collector.

As an example, the negative electrode current collector may be a metal foil, a foam metal, or a composite current collector. For example, as the metal foil, a silver-surface-processed aluminum or stainless steel, copper, aluminum, nickel, a carbon electrode, carbon, nickel, or titanium may be used. The foam metal may be foam nickel, foam copper, foam aluminum, foam alloy, foam carbon, etc. The composite current collector can comprise a polymer material substrate layer and a metal layer. The composite current collector can be formed by forming a metal material (copper, copper alloys, nickel, nickel alloys, titanium, titanium alloys, silver and silver alloys, etc.) on a polymer material substrate (such as substrate of polypropylene, polyethylene terephthalate, polybutylene terephthalate, polystyrene, polyethylene, etc.).

By way of example, the negative electrode current collector has two opposite surfaces in its own thickness direction, and the negative electrode active material is provided on either or both of the two opposite surfaces of the negative electrode current collector.

By way of example, the negative electrode active material can be a negative electrode active material well known in the art for a battery cell. By way of example, the negative electrode active material can comprise at least one of the following materials: artificial graphite, natural graphite, soft carbon, hard carbon, a silicon-based material, a tin-based material, lithium titanate, etc. The silicon-based material may be selected from at least one of elemental silicon, a silicon-oxygen compound, a silicon-carbon composite, a silicon-nitrogen composite, or a silicon alloy. The tin-based material may be selected from at least one of elemental tin, a tin-oxygen compound, or a tin alloy. However, the present application is not limited to these materials. Other traditional materials that can be used as negative electrode active materials for batteries may also be used. Only a single one of or a combination of two or more of these negative electrode active materials can be used.

In some embodiments, the material of the positive electrode current collector can be aluminum, and the material of the negative electrode current collector can be copper.

In some implementations, the electrode assembly further comprises a separator provided between the positive electrode plate and the negative electrode plate.

In some embodiments, the separator is a separator film. The type of the separator film is not particularly limited in the present application, and any well-known separator having good chemical stability, mechanical stability, and a porous structure can be selected.

By way of example, the main material of the separator film can be selected from at least one of glass fibers, non-woven fabric, polyethylene, polypropylene, polyvinylidene fluoride, and ceramic. The separator film can be either a single-layer thin film or a multi-layer composite thin film without special limitations. When the separator film is a multi-layer composite thin film, the material in each layer may be same or different, which is not particularly limited. The separator may be a single component located between the positive and negative electrodes, or may also be attached to the surfaces of the positive and negative electrodes.

In some embodiments, the separator is a solid electrolyte. The solid electrolyte is arranged between the positive electrode plate and the negative electrode plate and functions to both transmit ions between the positive electrode and the negative electrode and isolate the positive electrode from the negative electrode.

In some embodiments, the battery cell further comprises an electrolyte, which functions to conduct ions between the positive and negative electrodes. The type of the electrolyte is not specifically limited in the present application and can be selected according to requirements. The electrolyte can be liquid, gel, or solid.

In some embodiments, the liquid electrolyte further comprises an electrolyte salt and a solvent.

In some embodiments, the electrolyte salt can be selected from at least one of lithium hexafluorophosphate, lithium tetrafluoroborate, lithium perchlorate, lithium hexafluoroarsenate, lithium bis(fluorosulfonyl)imide, lithium bis-trifluoromethanesulfonimide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solution may also be an ether solvent. The ether solvent can include one or more of ethylene glycol dimethyl ether, ethylene glycol diethyl ether, diethylene glycol dimethyl ether, triethylene glycol dimethyl ether, 1,3-dioxolane, tetrahydrofuran, methyltetrahydrofuran, diphenylether, or a crowned ether.

The gel electrolyte comprises a framework network with a polymer as an electrolyte, in combination with an ion liquid-lithium salt.

The solid electrolyte includes a polymer solid electrolyte, an inorganic solid electrolyte, and a composite solid electrolyte.

By way of example, the polymer solid electrolyte can be polyether (polyoxyethylene), polysiloxane, polycarbonate, polyacrylonitrile, polyvinylidene fluoride, polymethyl methacrylate, a monoionic polymer, a polyionic liquid-lithium salt, cellulose, or a combination thereof.

By way of example, the inorganic solid electrolyte can be one or more of an oxide solid electrolyte (crystalline perovskite, a sodium superconducting ion conductor, and garnet), a sulfide solid electrolyte (crystalline lithium superconducting conductor (lithium germanium phosphorus sulfur and argyrodite) and amorphous sulfide), a halide solid electrolyte, a nitride solid electrolyte, and a hydride solid electrolyte.

By way of example, a composite solid electrolyte is formed by adding an inorganic solid electrolyte filler to a polymer solid electrolyte.

In some embodiments, the shape of the electrode assembly can be flat, polygonal prism, etc.

In some embodiments, the battery cell can comprise a shell. The shell is used for encapsulating components, such as the electrode assembly and the electrolyte. The shell can be a steel shell, an aluminum shell, a plastic shell (such as a polypropylene shell), a composite metal shell (such as a copper-aluminum composite shell), an aluminum-plastic film, etc.

By way of example, the battery cell can be a prismatic battery cell, a pouch cell, or a battery cell in other shapes. The prismatic battery cell includes a square-shell battery cell, a blade-shaped battery cell, and a polygonal prism battery cell. For example, the polygonal prism battery cell can be a hexagonal prism battery cell, etc., and is not particularly limited in the present application.

The battery mentioned in the embodiments of the present application refers to a single physical module comprising one or more battery cells to provide a higher voltage and capacity.

In some embodiments, the battery can be a battery module. When there are a plurality of battery cells, the plurality of battery cells are arranged and fixed to form a battery module.

In some embodiments, the battery can be a battery pack. The battery pack comprises a box body and a battery cell. The battery cell or the battery module is accommodated in the box body.

In some embodiments, the box body can be a part of a chassis structure of a vehicle. For example, a part of the box body can become at least a part of a floor of a vehicle, or a part of the box body can become at least a part of a cross beam and a longitudinal beam of a vehicle.

In some embodiments, the battery can be an energy storage apparatus. The energy storage device includes an energy storage container, an energy storage electric cabinet, etc.

In the battery cell, the shell can comprise a case and an end cover. The case has an opening. The end cover closes the opening. The case is an important component of the battery cell, and the molding difficulty thereof directly affects the production cost of the battery cell.

The case is generally formed by stamping or stretching a parent material. During the forming process, the parent material is subjected to a large acting force and is prone to breakage. The case is difficult to form and has a poor thickness consistency and a low yield of finished products. Especially when the case needs to be made thinner in order to increase the energy density of the battery cell, it is more difficult to form a thin-walled case by stamping or stretching. This makes it difficult to form a thin-walled case.

Based on the above considerations, the inventors have conducted in-depth research and designed a battery cell case. The case is designed to be a spliced structure, that is, the case is formed by splicing at least two side plates. Compared with a case integrally formed by stamping, the process is simple and the thickness consistency of the case is better, so that the case formation difficulty can be effectively reduced and the dimensional precision of the case can be improved.

The technical solutions described in the embodiments of the present application are suitable for a battery cell, a battery, and an electrical apparatus in which the battery is used.

The electrical apparatus can be, but is not limited to, a vehicle, a mobile phone, a portable device, a laptop, a ship, a spacecraft, an electric toy, an electric tool, etc. The vehicle can be, but is not limited to, a fuel vehicle, a gas vehicle, or a new energy vehicle. The new energy vehicle can be, but is not limited to, an all-electric vehicle, a hybrid electric vehicle, an extended-range electric vehicle, etc. The spacecraft includes, but is not limited to, an airplane, a rocket, a space shuttle, a spaceship, etc. The electric toy includes, but is not limited to, a fixed or mobile electric toy, such as a game machine, an electric vehicle toy, an electric ship toy, an electric airplane toy, etc. The electric tool includes, but is not limited to, an electric metal cutting tool, an electric grinding tool, an electric assembling tool, an electric tool for railways, for example, an electric drill, an electric grinder, an electric wrench, an electric screwdriver, an electric hammer, an electric impact drill, a concrete vibrator, and an electric planer.

It should be understood that the technical solutions described in the embodiments of the present application are not only applicable to the batteries and electrical devices described above, but also applicable to all batteries comprising a box body and electrical devices using batteries. However, for the sake of brevity, the following embodiments are described by taking an electric vehicle as an example.

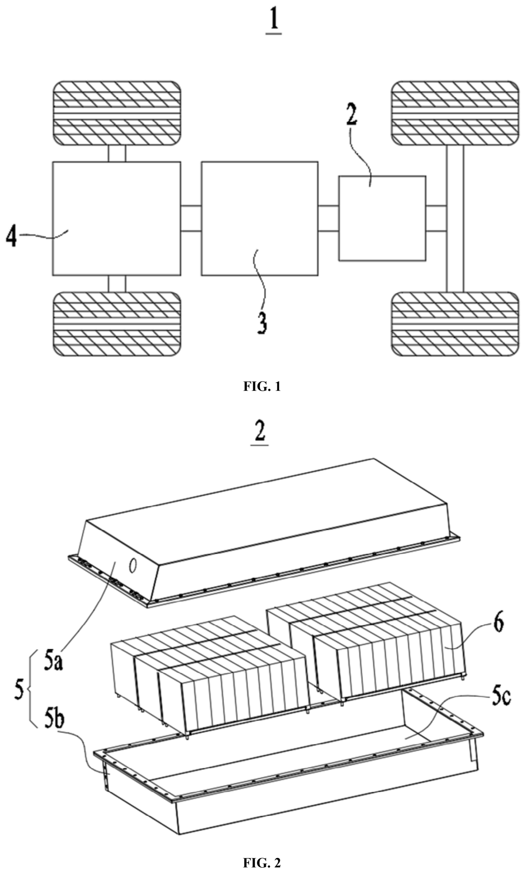

FIG. 1 is a schematic structural view of a vehicle provided in some embodiments of the present application.

With continued reference to FIG. 1, a battery 2 is arranged in the vehicle 1. The battery 2 can be arranged at the bottom, or head, or tail of the vehicle 1. The battery 2 can be used as a power source for the vehicle 1, for example, the battery 2 can be used as an operating power source for the vehicle 1.

The vehicle 1 can further comprise a controller 3 and a motor 4. The controller 3 is used for controlling the battery 2 to supply power to the motor 4, for example, for the operating power demand when starting, navigating, and driving the vehicle 1.

In some embodiments of the present application, the battery 2 can be used not only as the operating power source of the vehicle 1, but also as a driving power source of the vehicle 1 to replace or partially replace fuel or natural gas to provide driving power for the vehicle 1.

FIG. 2 is an exploded schematic view of a battery provided by some embodiments of the present application.

With continued reference to FIG. 2, the battery 2 comprises a box body 5 and a battery cell. The battery cell is accommodated in the box body 5.

The box body 5 is used for accommodating the battery cell, and the box body 5 can have various structures. In some embodiments, the box body 5 can comprise a first box part 5a and a second box part 5b. The first box part 5a and the second box part 5b cover each other. The first box part 5a and the second box part 5b jointly define an accommodating space 5c used for accommodating the battery cell. The second box part 5b can have a hollow structure with one end open. The first box part 5a has a plate-like structure, and the first box part 5a covers the open side of the second box part 5b to form the box body 5 with the accommodating space 5c. Each of the first box part 5a and the second box part 5b can also have a hollow structure with one side open. The open side of the first box part 5a covers the open side of the second box part 5b to form the box body 5 with the accommodating space 5c. Of course, the first box part 5a and the second box part 5b can be in various shapes, such as cylinders and cuboids.

In order to improve the sealing performance after the first box part 5a and the second box part 5b are connected, a sealing member such as a sealant and a sealing ring may also be arranged between the first box part 5a and the second box part 5b.

It is assumed that the first box part 5a covers the top of the second box part 5b, the first box part 5a can also be referred to as an upper box cover, and the second box part 5b can also be referred to as a lower box.

In the battery 2, there can be either one or more battery cells. If there are a plurality of battery cells, the plurality of battery cells can be connected in series, or in parallel, or in series-parallel. Being connected in series-parallel means that the plurality of battery cells are connected in both series and parallel. The plurality of battery cells can be directly connected together in series, or in parallel, or in series-parallel, and then, the entirety composed of the plurality of battery cells can be accommodated in the box body 5. Of course, the case may also be that a plurality of battery cells are connected in series, or in parallel, or in series-parallel in advance to form a battery module 6, and a plurality of battery modules 6 are then connected in series, or in parallel, or in series-parallel to form an entirety and accommodated in the box body 5.

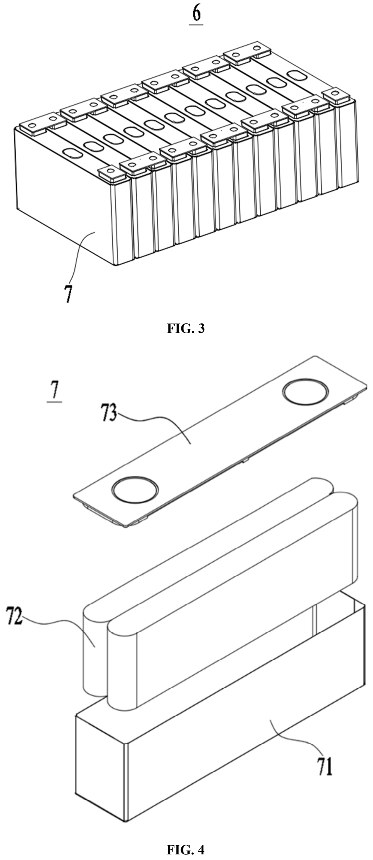

FIG. 3 is a schematic structural view of a battery module shown in FIG. 2.

In some embodiments, with continued reference to this figure, there are a plurality of battery cells 7, and the plurality of battery cells 7 are connected in series, or in parallel, or in series-parallel in advance to form a battery module 6. A plurality of battery modules 6 are then connected in series, or in parallel, or in series-parallel to form an entirety and accommodated in the box body.

The plurality of battery cells 7 in the battery module 6 can be electrically connected to each other via a busbar component to realize the connection of the plurality of battery cells 7 in the battery module 6 in series, or in parallel, or in series-parallel.

FIG. 4 is an exploded schematic view of a battery cell provided in some embodiments of the present application.

With continued reference to FIG. 4, the end cover 73 refers to a component that covers an opening of the case 71 to isolate an internal environment of the battery cell 7 from an external environment. Without limitation, the shape of the end cover 73 may match the shape of the case 71 so as to fit the case 71. Optionally, the end cover 73 may be made of a material (such as an aluminum alloy) with a certain hardness and strength, so that the end cover 73 is less likely to deform when being pressed and collided, the battery cell 7 can have a higher structural strength, and the reliability performance can also be improved. A functional component such as the electrode terminal may be arranged on the end cover 73. The electrode terminal may be used for electrically connecting to the electrode assembly 72, for outputting or inputting electrical energy of the battery cell 7. In some embodiments, the end cover 73 may be further provided with a pressure relief mechanism used for relieving an internal pressure when the internal pressure or temperature of the battery cell 7 reaches a threshold. The end cover 73 may also be made of various materials, such as copper, iron, aluminum, stainless steel, an aluminum alloy, and plastic. In some embodiments, an insulating member may be further arranged on an inner side of the end cover 73 and may be used for isolating an electrical connection component in the case 71 from the end cover 73, thereby reducing the risk of short circuit. By way of example, the insulating member may be made of plastic, rubber, etc.

The case 71 is an assembly for matching the end cover 73 to form the internal environment of the battery cell 7. The formed internal environment may be used for accommodating the electrode assembly 72, an electrolyte solution (not shown in the figure), and other components. The case 71 and the end cover 73 may be separate components. The case 71 can be provided with an opening, and at the opening, the end cover 73 cover the opening to form the internal environment of the battery cell 7. Without limitation, the end cover 73 and the case 71 may also be integrated. Specifically, the end cover 73 and the case 71 may form a common connection surface in advance before other components enter the case. When it is necessary to encapsulate the interior of the case 71, the end cover 73 covers the case 71. The case 71 may have various shapes and sizes, such as a cuboid, a cylinder, and a hexagonal prism. Specifically, the shape of the case 71 may be determined according to the specific shape and size of the electrode assembly 72. The case 71 may be made of various materials, such as copper, iron, aluminum, stainless steel, aluminum alloy, and plastic.

The electrode assembly 72 is a component of the battery cell 7 where an electrochemical reaction occurs. One or more electrode assemblies 72 may be contained in the case 71. The electrode assembly 72 is mainly formed by winding or laminating a positive electrode plate and a negative electrode plate, and a separator is usually arranged between the positive electrode plate and the negative electrode plate. The portions of the positive electrode plate and the negative electrode plate, on which active materials are present, constitute a main body portion of the electrode assembly 72, and the portions of the positive electrode plate and the negative electrode plate, on which no active materials are present, each constitute a tab. The positive electrode tab and the negative electrode tab may be both located at one end of the main body portion or located at two ends of the main body portion, respectively. During the charging and discharging process of the battery, the positive electrode active material and the negative electrode active material react with the electrolyte solution, and the tabs are connected to the electrode terminals to form a current loop.

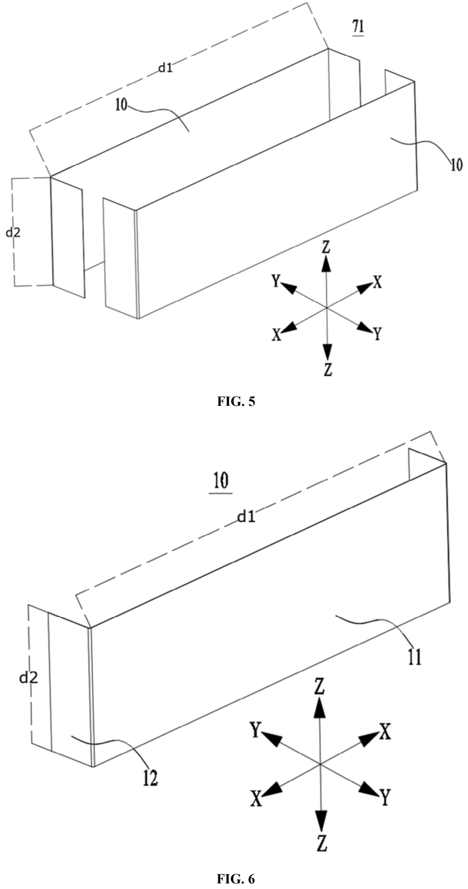

FIG. 5 is a schematic structural view of a case of a battery cell provided in some embodiments of the present application.

With continued reference to FIG. 5, an embodiment of the present application provides a battery cell case 71, the case 71 comprising at least two side plates 10. Each of the side plates 10 is formed independently, and the at least two side plates 10 are sequentially arranged and connected along a circumferential direction of the case 71 to enclose a hollow tubular structure.

The case 71 may be a cylinder, a prism, etc. The prism may be a triangular prism, a quadrangular prism, a pentagonal prism, a hexagonal prism, etc. By way of example, as shown in FIG. 5, the quadrangular prism may be a cuboid.

Optionally, the number of the side plates 10 may be, but is not limited to, two, three, or more, and may be selected according to actual situations.

Optionally, the side plates 10 can be made of a material such as a metal or plastic. For example, the metal can be aluminum, stainless steel, copper, etc., where the stainless steel can be 316L stainless steel or 304 stainless steel; the plastic can be polyethylene, polypropylene, polyvinyl chloride, etc.

Illustratively, each of the side plates 10 being independently formed means that the side plates 10 are first processed into a specific structural shape by a process such as casting or stamping, and then, the side plates 10 are sequentially arranged and connected along the circumferential direction of the case 71 to enclose a hollow tubular structure. Optionally, the method of connection between the at least two side plates 10 can be snap fitting, welding, bonding, etc. The specific method of connection between the at least two side plates 10 can be selected according to actual situations.

In the above technical solution, the case 71 is configured to be formed by splicing at least two independently formed side plates 10. Compared with a case 71 integrally formed by stamping, the process is simple, the thickness consistency of the case 71 is relatively good, and the curvature at the corner of the case 71 can be better controlled, so that the dimensional precision of the case 71 can be effectively improved.

In some embodiments, the thickness t1 of the side plates 10 satisfies the following relationship: 0.1 mm ≤ t1 ≤ 0.3 mm.

Illustratively, the thickness t1 of the side plates 10 can be, but is not limited to, 0.1 mm, 0.15 mm, 0.17 mm, 0.19 mm, 0.2 mm, 0.23 mm, 0.25 mm, 0.27 mm, 0.29 mm, 0.3 mm, etc.

It needs be noted that when the thickness t1 of the side plates 10 is ≤ 0.1 mm, the strength requirement cannot be met, resulting in a relatively low reliability of the battery cell. When the thickness t1 of the side plates 10 is ≥ 0.3 mm, the overall weight of the case 71 is too large. On the one hand, the energy density of the battery will be affected; on the other hand, when at least two side plates 10 are connected by welding, the greater the thickness of the side plate 10, the greater the heat required for welding. Excessive heat can easily cause the case 71 to deform during the welding process, thus affecting the product yield.

Thus, by defining the thickness of the side plates 10 within the above range, the above technical solution can make the case 71 lightweight while enabling the case 71 to meet strength requirements and can effectively improve the energy density of the battery cell.

In some embodiments, the tubular structure may be either a rectangular tubular structure or a cylindrical tubular structure, which may be selected according to specific actual situations. The specific structural shape of the tubular structure is diversified, so that the applicability of the case 71 can be effectively improved.

In some embodiments, two adjacent side plates 10 are welded in the circumferential direction of the case 71. Compared with other connection methods, welding has a higher connection firmness and a lower cost.

FIG. 6 is a schematic structural view of a side plate of a case of a battery cell provided in some embodiments of the present application.

With continued reference to FIGs. 5 and 6, in some embodiments, the case 71 comprises two side plates 10. Each of the side plates 10 comprises a main body portion 11 and two bending portions 12. The two bending portions 12 are respectively connected to two ends of the main body portion 11 along a first direction X and are bent relative to the main body portion 11. The main body portions 11 of the two side plates 10 are opposite to each other along a second direction Y, and the first direction X intersects with the second direction Y. The two bending portions 12 of one of the side plates 10 are respectively connected to the two bending portions 12 of the other side plate 10.

Illustratively, the first direction X can be understood as the length direction of the case 71, and the second direction Y can be understood as the width direction of the case 71.

Optionally, the method of connection between the bending portions 12 and the main body portion 11 may be welding, bolting, bonding, etc.

Optionally, the bending portions 12 and the main body portion 11 may also be an integrally formed structure, and the side plate 10 is formed by integrally forming the main body portion 11 and the bending portions 12 by a casting or stamping process. On the one hand, there is no need to connect the bending portions 12 and the main body portion 11 by an additional connection process, which simplifies the manufacturing process. In addition, compared with connecting the bending portions 12 and the main body portion 11 by an additional connection process, the bending portions 12 and the main body portion 11, as an integrated structure, have a higher connection firmness, which can further improve the structural strength of the side plate 10.

In the above technical solution, two side plates 10 are used and connected to form a case 71, which greatly simplifies the structural complexity of the case 71 and can not only further improve the dimensional precision of the case 71, but also help to reduce the preparation cost of the case 71.

In some embodiments, a dimension of the main body portion 11 in the first direction X is d1, a dimension of the bending portions 12 in a third direction Z is d2, d1 ≥ 2 * d2, and any two of the first direction X, the second direction Y, and the third direction Z are perpendicular to each other.

Illustratively, the third direction Z may be understood as the height direction of the case 71. As described above, the two side plates 10 are connected via the bending portions 12. In other words, the bending portions 12 are the joint of the two side plates 10. It can be understood that the larger the dimension of the bending portions 12 in the third direction Z, the higher the possibility of deformation during the preparation process, which leads to a relatively poor precision and thus affects the effect of connection between the two side plates 10.

Thus, in the above technical solution, the dimension of the main body portion 11 in the first direction X and the dimension of the bending portions 12 in the third direction Z are defined as being within the above ranges, which can to a certain extent avoid relatively poor precision caused by the dimension of the bending portions 12 in the third direction X being too long, thereby affecting the effect of connection between the two side plates 10. Not only can the connection firmness between the two side plates 10 and thus the overall structural strength of the case 71 be improved, but also the overall dimensional precision of the case 71 can be further improved.

In some embodiments, d1 satisfies the following relationship: 100 mm ≤ d1 ≤ 1000 mm.

Illustratively, the dimension d1 of the main body portion 11 in the first direction X may be, but is not limited to, 100 mm, 200 mm, 300 mm, 400 mm, 500 mm, 550 mm, 600 mm, 650 mm, 700 mm, 750 mm, 800 mm, 850 mm, 900 mm, 950 mm, 1000 mm, etc.

It needs be noted that the larger the dimension d1 of the main body portion 11 in the first direction X, the longer the length of the case 71. Therefore, the case 71 can accommodate an electrode assembly with a larger size. Due to limitations imposed by the material, the case 71 integrally formed by stamping can be often only formed as a case 71 with a relatively small capacity, which is not compatible with a large-sized electrode assembly.

Thus, the above technical solution can form a case 71 with a relatively large length, which can thus meet the accommodation requirements for large-sized electrode assemblies and can effectively improve the applicability of the case 71.

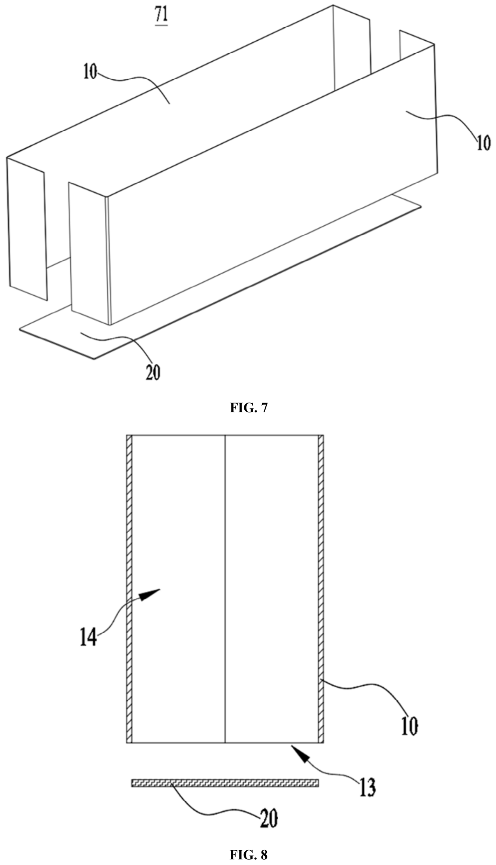

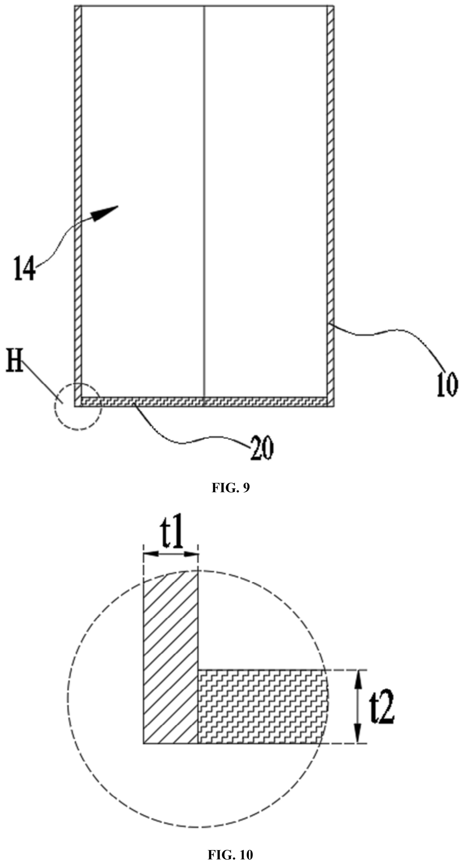

FIG. 7 is an exploded structural axonometric view of a case of another battery cell provided by some embodiments of the present application; FIG. 8 is an exploded structural side view of a case of another battery cell provided by some embodiments of the present application; FIG. 9 is a structural side view of the assembled case of another battery cell provided by some embodiments of the present application; and FIG. 10 is an enlarged schematic structural view of FIG. 9 at H.

With continued reference to FIGs. 7-10, in some embodiments, a first opening 13 is formed at one end of the tubular structure, the case 71 further comprises a first end cover 20, and the first end cover 20 is connected to the at least two side plates 10 and covers the first opening 13.

Illustratively, a first opening 13 is formed at one end of the tubular structure along the third direction Z. The first end cover 20 can be understood as a bottom cover of the case 71. The first end cover 20 can be made of the same material as the side plate 10, or can be made of a different material from the side plate 10.

Optionally, the first end cover 20 can be made of a material such as a metal or plastic. For example, the metal can be aluminum, stainless steel, copper, etc., where the stainless steel can be 316L stainless steel or 304 stainless steel; the plastic can be polyethylene, polypropylene, polyvinyl chloride, etc.

Optionally, the method of connection between the first end cover 20 and the side plate 10 may be, but is not limited to, bolting, welding, bonding, etc., which can be selected according to actual situations.

In the above technical solution, the first end cover 20 is independently formed and connected to the side plates 10 to jointly form a case 71, which can further improve the curvature at the connection between the first end cover 20 and the side plates 10 and can thus improve the dimensional precision of the case 71, so that the risk of interference caused by contact between the electrode assembly and the case 71 can be avoided to a certain extent.

In some embodiments, the first end cover 20 is welded to the at least two side plates 10. Compared with other connection methods, welding has a higher connection firmness and a lower cost.

In some embodiments, the thickness of the first end cover 20 is greater than the thickness of the side plates 10.

It can be understood that the first end cover 20 can serve as a bottom cover of the case 71, that is, the first end cover 20 needs to bear the weight of the electrode assembly. Thus, the thickness of the first end cover 20 is greater than the thickness of the side plates 10, so that the first end cover 20 has a better structural strength to meet the requirement of bearing the weight of the electrode assembly, thereby improving the reliability of the case 71.

In some embodiments, the thickness t2 of the first end cover 20 satisfies the following relationship: 0.4 mm ≤ t2 ≤ 1 mm.

Illustratively, the thickness t2 of the first end cover 20 may be, but is not limited to, 0.4 mm, 0.45 mm, 0.5 mm, 0.55 mm, 0.6 mm, 0.65 mm, 0.7 mm, 0.75 mm, 0.8 mm, 0.85 mm, 0.9 mm, 0.95 mm, 1 mm, etc.

It needs be noted that when the thickness t2 of the first end cover 20 is ≤ 0.4 mm, the strength requirement cannot be met, resulting in a relatively low reliability of the battery cell. When the thickness t2 of the first end cover 20 is ≥ 1 mm, the overall weight of the case 71 is too large. On the one hand, the energy density of the battery will be affected; on the other hand, when the first end cover 20 is connected to the side plates 10 by welding, the greater the thickness of the first end cover 20, the greater the heat required for welding. Excessive heat can easily cause the case 71 to deform during the welding process, thus affecting the product yield.

Thus, by defining the thickness of the first end cover 20 within the above range, the above technical solution can make the case 71 lightweight while enabling the first end cover 20 to meet strength requirements and can effectively improve the energy density of the battery cell.

In some embodiments, at least part of the first end cover 20 is accommodated in an accommodating space 14 enclosed by the tubular structure, and an outer peripheral surface of the first end cover 20 abuts against side surfaces of the side plates 10 close to the accommodating space 14.

At least part of the first end cover 20 is accommodated in an accommodating space 14 enclosed by the tubular structure, so that the overall volume of the case 71 can be correspondingly reduced, thereby facilitating the improvement of the energy density of the battery cell.

In some embodiments, the first end cover 20 is completely accommodated in the accommodating space 14, which can further improve the energy density of the battery cell.

According to some embodiments of the present application, the present application further provides a battery cell, comprising the case 71 in any one of the above solutions.

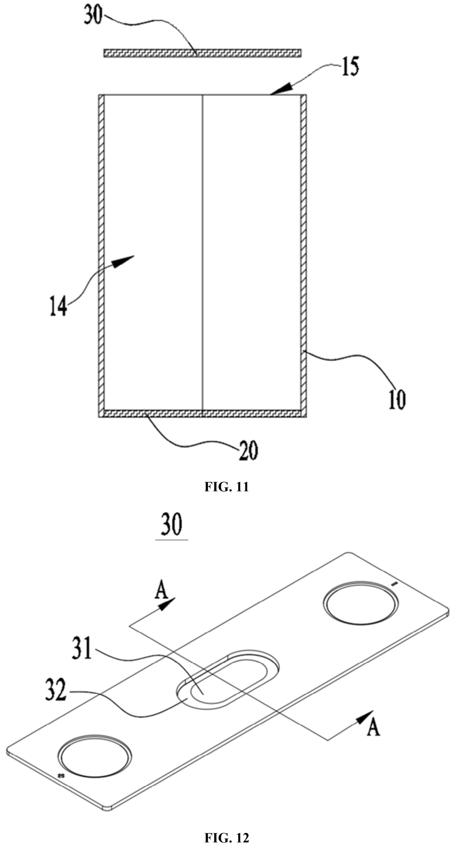

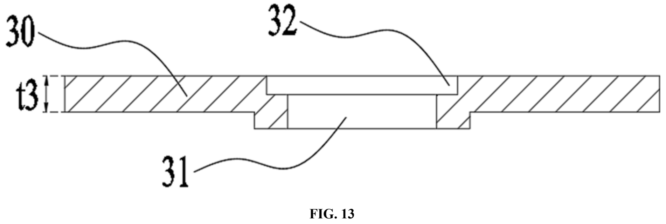

FIG. 11 is a schematic structural view of a case of another battery cell provided by some embodiments of the present application; FIG. 12 is an enlarged schematic structural view of a second end cover of a case of another battery cell provided by some embodiments of the present application; and FIG. 13 is a schematic cross-sectional view of FIG. 12 taken along A-A.

With continued reference to FIGs. 10-12, in some optional embodiments, a second opening 15 is formed at the other end of the tubular structure of the case 71. The battery cell further comprises a second end cover 30 and an electrode assembly, the second end cover 30 is connected to at least two side plates 10 and covers the second opening 15, and the electrode assembly is accommodated in the case 71.

A first opening 13 is formed at one end of the tubular structure along the third direction Z. Illustratively, a second opening 15 is formed at the other end of the tubular structure along the third direction Z, and the second end cover 30 can be understood as a top cover of the battery cell (by way of example, an end cover 73 as shown in FIG. 4). The second end cover 30 can be made of the same material as the side plate 10, or can be made of a different material from the side plate 10.

Optionally, the second end cover 30 can be made of a material such as a metal or plastic. For example, the metal can be aluminum, stainless steel, copper, etc., where the stainless steel can be 316L stainless steel or 304 stainless steel; the plastic can be polyethylene, polypropylene, polyvinyl chloride, etc.

Optionally, the method of connection between the second end cover 30 and the side plates 10 can be bolting, welding, bonding, etc. The specific method of connection between the second end cover 30 and the side plates 10 in the present application can be selected according to actual situations.

In some embodiments, the thickness t3 of the second end cover 30 satisfies the following relationship: 0.4 mm ≤ t3 ≤ 0.8 mm.

Illustratively, the thickness t3 of the second end cover 30 may be, but is not limited to, 0.4 mm, 0.45 mm, 0.5 mm, 0.55 mm, 0.6 mm, 0.65 mm, 0.7 mm, 0.75 mm, 0.8 mm, etc.

It needs be noted that when the thickness t3 of the second end cover 30 is ≤ 0.4 mm, the strength requirement cannot be met, resulting in a relatively low reliability of the battery cell. When the thickness t3 of the second end cover 30 is ≥ 0.8 mm, the overall weight of the case 71 is too large. On the one hand, the energy density of the battery will be affected; on the other hand, when the second end cover 30 is connected to the side plates 10 by welding, the greater the thickness of the second end cover 30, the greater the heat required for welding. Excessive heat can easily cause the case 71 to deform during the welding process, thus affecting the product yield.

Thus, by defining the thickness of the second end cover 30 within the above range, the above technical solution can make the case 71 lightweight while enabling the second end cover 30 to meet strength requirements and can effectively improve the energy density of the battery cell.

In some embodiments, the second end cover 30 is provided with a pressure relief port 31 and a stress relief groove 32 surrounding the pressure relief port 31. The battery cell further comprises a pressure relief mechanism, and the pressure relief mechanism is installed on the second end cover 30 and covers the pressure relief port 31.

Illustratively, when internal pressure or temperature of the battery cell reaches a threshold, the pressure relief mechanism can relieve the internal pressure inside the battery cell. It can be understood that during the installation of the pressure relief mechanism on the pressure relief port 31, the second end cover 30 may be affected. For example, when the pressure relief mechanism is welded to the pressure relief port 31, the thermal stress during welding may cause deformation of the second end cover 30, thereby affecting the flatness of the second end cover 30, thereby affecting the assembly between the second end cover 30 and the case 71. The material of the pressure relief mechanism may include nickel. Furthermore, the pressure relief mechanism comprises a nickel sheet, and the nickel sheet can be directly welded to the pressure relief port 31.

Optionally, the method of connection between the pressure relief mechanism and the second end cover 30 can be welding, such as laser welding, where a laser for laser welding may be, but is not limited to, a fiber laser, a quasi-continuous laser, etc. Furthermore, the fiber laser or the quasi-continuous laser may be used in combination with a galvanometer to achieve low welding heat input. Furthermore, the spot diameter during laser welding is less than or equal to 0.2 mm, for example, 0.05 mm, 0.1 mm, 0.15 mm, or 0.2 mm.

Optionally, the number of the stress relief grooves 32 may be one, and the stress relief groove may be annular and arranged around the pressure relief port 31. There may be a plurality of the stress relief grooves 32, and the plurality of stress relief grooves 32 are distributed at intervals around the pressure relief port 31.

Optionally, the stress relief groove 32 may be formed by creating a depression on the surface of the second end cover 30 away from the first end cover 20, or may also be formed by creating a depression on the surface of the second end cover 30 close to the first end cover 20.

In the above technical solution, the stress relief groove 32 can absorb the stress generated during the installation of the pressure relief mechanism and the pressure relief port 31, which can thus reduce the impact of the installation of the pressure relief mechanism and the pressure relief port 31 on the second end cover 30 and make it beneficial to improving the product yield.

According to some embodiments of the present application, the present application further provides a battery, comprising the battery cell in any one of the above solutions.

According to some embodiments of the present application, the present application further provides an electrical apparatus, comprising the battery cell of any one of the above solutions, and the battery cell is used for supplying electrical energy.

According to some embodiments of the present application, the present application further provides a method for manufacturing a case, which is used for manufacturing the case of any one of the above solutions. The method for manufacturing a case comprises:
providing at least two independently formed side plates; and welding the at least two side plates sequentially along a circumferential direction of the case to enclose a hollow tubular structure.

In some embodiments, the method for manufacturing a case further comprises:
providing a first end cover; and welding the first end cover to one end of the tubular structure.
In some embodiments, the welding is laser welding.

By way of example, the laser for laser welding of the case may be, but is not limited to, a quasi-continuous laser. Furthermore, the quasi-continuous laser may be used in combination with a galvanometer to achieve low welding heat input.

By way of example, a shielding gas during the laser welding process of the case may be, but is not limited to, nitrogen, and the welding speed is 70-200 mm/s.

In order to better understand the case 71 of the battery cell provided in the embodiments of the present application, based on the same inventive concept, an embodiment of the case 71 in practical application is provided herein for explanation.

An embodiment of the present application provides a battery cell case 71. The case 71 comprises a first end cover 20 and two side plates 10. Each of the side plates 10 comprises a main body portion 11 and two bending portions 12. The two bending portions 12 are respectively connected to two ends of the main body portion 11 along a first direction X and are bent relative to the main body portion 11. The main body portions 11 of the two side plates 10 are opposite to each other along a second direction Y, and the first direction X intersects with the second direction Y. The two bending portions 12 of one of the side plates 10 are respectively connected to the two bending portions 12 of the other side plate 10 to enclose a hollow tubular structure. A first opening 13 is formed at one end of the tubular structure, and the first end cover 20 is connected to the at least two side plates 10 and covers the first opening 13. The first end cover 20 is completely accommodated in an accommodating space 14 enclosed by the tubular structure, and an outer peripheral surface of the first end cover 20 abuts against side surfaces of the side plates 10 close to the accommodating space 14.

A dimension of the main body portion 11 in the first direction X is d1, a dimension of the bending portions 12 in a third direction Z is d2, d1 ≥ 2 * d2, and any two of the first direction X, the second direction Y, and the third direction Z are perpendicular to each other. d1 satisfies the following relationship: 100 mm ≤ d1 ≤ 1000 mm.

The thickness t1 of the side plates 10 satisfies the following relationship: 0.1 mm ≤ t1 ≤ 0.3 mm. The thickness t2 of the first end cover 20 satisfies the following relationship: 0.4 mm ≤ t2 ≤ 1 mm.

An embodiment of the present application further provides a battery cell, which comprises a second end cover 30, an electrode assembly, a pressure relief mechanism, and the above case 71. A second opening 15 is formed at the other end of the tubular structure of the case 71, the second end cover 30 is connected to at least two side plates 10 and covers the second opening 15, and the electrode assembly is accommodated in the case 71. The second end cover 30 is provided with a pressure relief port 31 and a stress relief groove 32 surrounding the pressure relief port. The pressure relief mechanism is installed on the second end cover 30 and covers the pressure relief port 31.

The thickness t3 of the second end cover 30 satisfies the following relationship: 0.4 mm ≤ t3 ≤ 0.8 mm.

It needs to be noted that, without conflict, the embodiments in the present application and the features in the embodiments may be combined with each other.

Finally, it should be noted that all the above embodiments are only used for explaining, rather than limiting, the technical solution of the present application. Although the present application has been described in detail with reference to all the above embodiments, it should understand by those of ordinary skill in the art that the technical solutions described in the above embodiments can still be modified, or some or all of the technical features thereof can be equivalently replaced. The modifications or replacements do not deviate the nature of the corresponding technical solutions from the scope of the embodiments of the present application, and should all be included in the scope of the claims and specification of the present application. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A battery cell case, comprising at least two side plates, wherein each of the side plates is formed independently, and the at least two side plates are sequentially arranged and connected along a circumferential direction of the case to enclose a hollow tubular structure.

2. The case according to claim 1, wherein the thickness t1 of the side plates satisfies the following relationship: 0.1 mm ≤ t1 ≤ 0.3 mm.

3. The case according to claim 1, wherein the tubular structure is a rectangular tubular structure or a cylindrical tubular structure.

4. The case according to claim 1, wherein two adjacent side plates are welded in the circumferential direction of the case.

5. The case according to claim 1, wherein the case comprises two side plates;
each of the side plates comprises a main body portion and two bending portions, the two bending portions are respectively connected to two ends of the main body portion along a first direction and are bent relative to the main body portion;
the main body portions of the two side plates are opposite to each other along a second direction, and the first direction intersects with the second direction; and
the two bending portions of one of the side plates are respectively connected to the two bending portions of the other side plate.

6. The case according to claim 5, wherein a dimension of the main body portion in the first direction is d1, a dimension of the bending portion in a third direction is d2, d1 ≥ 2 * d2, and any two of the first direction, the second direction, and the third direction are perpendicular to each other.

7. The case according to claim 6, wherein d1 satisfies the following relationship: 100 mm ≤ d1 ≤ 1000 mm.

8. The case according to claim 1, wherein a first opening is formed at one end of the tubular structure; and
the case further comprises a first end cover, and the first end cover is connected to the at least two side plates and covers the first opening.

9. The case according to claim 8, wherein the first end cover is welded to the at least two side plates.

10. The case according to claim 8, wherein the thickness of the first end cover is greater than the thickness of the side plates.

11. The case according to claim 10, wherein the thickness t2 of the first end cover satisfies the following relationship: 0.4 mm ≤ t2 ≤ 1 mm.

12. The case according to claim 8, wherein at least part of the first end cover is accommodated in an accommodating space enclosed by the tubular structure, and an outer peripheral surface of the first end cover abuts against side surfaces of the side plates close to the accommodating space.

13. The case according to claim 12, wherein the first end cover is completely accommodated in the accommodating space.

14. A battery cell, comprising the case according to any one of claims 1-13.

15. A battery cell, comprising:
the case according to any one of claims 8-13, wherein a second opening is formed at the other end of the tubular structure;
a second end cover connected to the at least two side plates and covering the second opening; and
an electrode assembly accommodated in the case.

16. The battery cell according to claim 15, wherein the thickness t3 of the second end cover satisfies the following relationship: 0.4 mm ≤ t3 ≤ 0.8 mm.

17. The battery cell according to claim 15, wherein the second end cover is provided with a pressure relief port and a stress relief groove surrounding the pressure relief port; and
the battery cell further comprises a pressure relief mechanism, and the pressure relief mechanism is installed on the second end cover and covers the pressure relief port.

18. A battery, comprising a plurality of the battery cell according to any one of claims 14-17.

19. An electrical apparatus, comprising the battery cell according to any one of claims 14-17, wherein the battery cell is used for providing electrical energy.

20. A method for manufacturing a case, wherein the method is used for manufacturing the case according to any one of claims 1-13 and comprises:
providing at least two independently formed side plates; and
welding the at least two side plates sequentially along a circumferential direction of the case to enclose a hollow tubular structure.

21. The method for manufacturing a case according to claim 20, wherein the method for manufacturing a case further comprises:
providing a first end cover; and
welding the first end cover to one end of the tubular structure.

22. The method for manufacturing a case according to claim 20 or 21, wherein the welding is laser welding.
